# EUROPEAN PATENT SPECIFICATION

(11) **EP 2 396 392 B1**
(45) Date of publication and mention of the grant of the patent: **08.04.2015**
(21) Application number: 10702711.2
(22) Date of filing: 09.02.2010
(51) Int. Cl.: B01J 8/08, B01J 8/10, B01J 3/04, C10L 9/08

(54) **HYDROTHERMAL PROCESS FOR THE PREPARATION OF COAL-LIKE MATERIAL FROM BIOMASS AND EVAPORATION COLUMN**
HYDROTHERMALVERFAHREN ZUR HERSTELLUNG EINES KOHLENÄHNLICHEN MATERIALS AUS BIOMASSE UND VERDAMPFERSÄULE
PROCESSUS HYDRO-THERMIQUE POUR LA PRÉPARATION D'UN MATÉRIAU DE TYPE CARBONE À PARTIR DE BIOMASSE ET COLONNE D'ÉVAPORATION

(30) Priority: 10.02.2009 EP 09001821; 17.02.2009 US 153093 P
(43) Date of publication of application: 21.12.2011
(73) Proprietor: CSL Carbon Solutions Ltd, Helier Jersey JE 4 9WG10 (GB)
(72) Inventor: STARK, Arne, 14163 Berlin (DE); ANTONIETTI, Markus, 14558 Bergholz-Rehbrücke (DE)
(74) Representative: Hoffmann Eitle
(86) International application number: PCT/EP2010/051554
(87) International publication number: WO 2010/092040

(56) References cited:
- WO-A-91/03530
- WO-A-96/41070
- WO-A-2008/116993
- WO-A2-2008/081407
- FR-A- 2 551 083
- US-A- 2 966 400

## Description

### FIELD OF THE INVENTION

The present invention relates generally to a hydrothermal carbonisation process for the preparation of coal-like material from biomass, more particularly to an improved and quicker process yielding the coal-like material in enhanced space-time yield, and which, moreover, allows for enhanced quality control of the final product, as well as improved reproducibility. Also, the process of the invention is advantageous in that it is simpler and consumes less energy than the hydrothermal processes of the prior art. According to another aspect, the current invention relates to a column, preferably an evaporation column comprising rotatable elements that can be used with benefit in the hydrothermal carbonisation process of the invention.

### BACKGROUND ART

In the past, many efforts have been made to imitate the natural coalification of biomass, which takes place on a time scale of some hundred (peat) to hundred million (black coal) years. Besides the formation of charcoal by pyrolysis of dry biomass, the so-called hydrothermal carbonization (HTC) process for the manufacture of coal or coal-like materials has recently attracted increasing attention.

while the principle of hydrothermal transformation of cellulose into coal-like materials was developed as early as 1913 by Bergius, the hydrothermal carbonization has recently seen as renaissance triggered by the reports of M. Antonietti, who is one of the present inventors. In 2006, M. Antonietti reported that coal-like material can be obtained by heating biomass and water in the presence of a catalyst in a pressure vessel at 180°C for 12 hours. The research group of M. Antionietti further optimized the HTC process. For instance, M.M. Titirici et al., in New J. Chem., 31 (2007), pp. 787-789 described the catalyzed HTC as an attractive alternative for the sequestration of carbon from biomass to treat the CO₂ problem. According to the paper, the optimum reaction conditions involve heating biomass dispersion under weakly acidic conditions in a closed reaction vessel for 4 - 24 h to temperatures of around 200 °C.

Generally, the HTC of biomass to give coal-like materials was carried out as a one-step batch process.

WO 2008/138637 relates to a process for the preparation of coal or humus from biomass by hydrothermal carbonization. The process is characterized in that the internal temperature of the reactor is controlled by discharging reaction heat from the reactor in the form of steam. The steam can also be used to heat the biomass in a pre-heating unit arranged upstream of the reactor.

However, the known processes for the preparation of coal-like materials by hydrothermal carbonization as described above left much to be desired in terms of heat management, as well as yield, efficiency and quality control of the final coal-like material.

Accordingly, it is an object of the present invention to provide a process for the preparation of coal-like material from biomass which is quicker, more efficient and gives a higher yield of product, and which moreover allows an enhanced control and reproducibility of the quality of the final product in comparison to the methods of the prior art. A further object resides in a process which is improved in terms of heat management.

A still further object is the provision of a column, preferably an evaporation column suitable for use in the hydrothermal process of the invention.

WO 96/41070 relates to a continuously operable method of rendering relatively low grade carbonaceous fuel readily transportable and combustible. The method comprises the steps of forming a fuel slurry including the fuel and a liquid, pressurizing the fuel slurry to keep it substantially in its liquid state, heating the fuel slurry to a temperature at which a substantial portion of oxygen chemically bound in molecules of the carbonaceous fuel splits off as carbon dioxide, thereby forming a char slurry including char particles derived from the fuel and an evolved gas, and storing the char slurry for later use. It is stated in the document that the usual temperature at which the splitting off of a substantial proportion of the bound oxygen as carbon dioxide takes place is between 220°C and 370°C. At these conditions solid particles in the feed slurry are described as losing much of their fibrous and hydrophilic character and as being broken up into smaller particles of char, resulting in a slurry of dramatically improved rheology. A specific reactor design for running the method is shown in Fig. 3 of WO 96/41070 and described from page 31, line 11 onwards. As illustrated in Fig. 3, carbonaceous solids are moved upwards against a fluid pressure gradient using mechanical twin screws within a vertical column, and the upwardly conveyed solids reaching the upper end of the column are further conveyed by a power-driven horizontal rotating screw into a vessel which is essentially at the same pressure and hence temperature as the column.

WO 91/03530 is concerned witch a method for the beneficiation of carbonaceous materials whereby carbonaceous solids, such; as biomass, are treated so as to upgrade heating value, reduce moisture content, and improve handling characteristics. The method is stated as utilizing a thermochemical process of hydrothermal reforming, also known as wet carbonization or hot-water drying, for beneficiating, i.e., treating so as to improve the useful properties of, carbonaceous solids. The hydrothermal reforming reaction of WO 91/03530 is generally operated at a peak temperature of about 230°C to 330°C, and the pressure within the reactor used for the reaction should be sufficient to prevent vaporization of the process liquid, typically water, at these!temperatures.

Starting out from the hydrothermal carbonisation on a laboratory scale proposed by Professor M. Antonietti, WO 2008/081407 sets out to develop a method by means of which fuels, humus, carbon-containing materials as well as Maillard or Maillard-like reaction products can be manufactured economically and with high efficiency from a solid-liquid mixture, in particular, on an industrial scale. The method is a one-step method carried out at a general temperature of above 160°C, preferably between 160°C and 300°C and more preferably between 185°C and 225°C. Preferably, the method is carried out in WO 2008/081407 in a stirred tank reactor, such as a loop reactor.

### SUMMARY OF THE INVENTION

The present inventors have found that the above objects can be achieved by a hydrothermal carbonisation process for the preparation of coal-like material from biomass as defined in claim 1. The claimed process involves the heating of the reaction mixture comprising biomass with steam, which is moving counter-currently relative to the reaction mixture. During the heating, the biomass is activated. The activation will occasionally be referred to as the first step of the process, hereinafter. In the process of the invention, the activated biomass is subsequently polymerized to give coal-like material. The polymerization will sometimes be referred to as a second step of the process of the invention in this specification.

As will be further illustrated below, by the counter-current movement of the reaction mixture comprising biomass and the steam, the HTC process of the invention can be run energetically self-sufficient during stable operation.

Preferred embodiments of the hydrothermal process of the invention are subject of the dependent claims.

Another aspect of the invention relates to a column, preferably an evaporation column. The column in accordance with the invention, which will be further described below, allows for the safe conveyance without clogging, of more viscous fluids, i.e. slurries, downwards the column, while the more viscous fluids can be brought in contract with less viscous fluids, namely steam, moving upwards the column. For these reasons, the hydrothermal process for the preparation of coal-like material in accordance with the present invention can be carried out in said column with benefit.

The column comprises at least one mass transfer tray (sieve plate) that is disposed within a housing of the column and has a plurality of perforations, the perforations providing exclusive means of communicating between the space above the mass transfer tray and the space below; only one rotor shaft passing through a rotor shaft opening in the mass transfer tray; at least one upper rotor element mounted on the rotor shaft and being disposed above the mass transfer tray, wherein the upper rotor element is arranged so as to transfer a reaction mixture, for instance a reaction mixture comprising biomass through the perforations to the space below the mass transfer tray; and the housing provided at its upper end with an upper inlet (feed) and upper outlet and, at its lower end, with a lower inlet and lower outlet, the upper inlet and lower outlet permitting more viscous fluid, namely slurry, to be introduced into the column and to be taken therefrom, and the lower inlet and upper outlet permitting less viscous fluid, namely steam, to be introduced into the column and to be taken therefrom.

In a preferred embodiment of the column, the at least one mass transfer tray and the rotor shaft are oriented in a first and second direction perpendicular to each other. More preferably, the at least one mass transfer tray is oriented horizontally (first direction), and the rotor shaft is oriented vertically (second direction), wherein the horizontal and vertical orientations refer to the positioning of the mass transfer tray(s) and rotor shaft when the column is in use.

Differently stated, the column of the invention can be described as follows. It has a longitudinal extension and a first end and a second end. The at least one horizontally oriented mass transfer tray having a plurality of perforations is preferably oriented perpendicular to the longitudinal extension, and the at least one rotor shaft passing through a rotor shaft opening in the mass transfer tray is preferably oriented along the longitudinal extension of the column. The perforations in the mass transfer tray(s) provide exclusive means of communicating between the opposite sides of the mass transfer tray. At least one first rotor element is mounted on the rotor shaft on the side of the mass transfer tray facing the first end of the column. Taking account of the fact that the first end of the column is the upper end while the column is in use, the first rotor element can also be referred to as the upper rotor element. It is arranged such that it is capable of transferring a reaction mixture through the perforations of the mass transfer tray to the opposite side of the tray facing the second end of the column. The column further comprises a housing, preferably a longitudinal housing, within which the at least one mass transfer tray is disposed. The housing is provided both at its first end and at its second end with at least one inlet and at least one outlet. The first end of the housing is facing the first end of the column, and the second end of the housing the second end of the column. Taking into consideration the orientation of the column upon use, the inlet(s) and outlet(s) at the first end of the housing can also be referred to as upper inlet(s) and upper outlet(s), and the inlec(s) and outlet(s) at the second end of the housing as lower inlet(s) and lower outlet(s). The upper inlet and lower outlet permit slurries, to be introduced into the column and to be taken therefrom, and the lower inlet and upper outlet permit steam to be introduced into the column and to be taken therefrom.

According to a preferred embodiment, the column of the invention further comprises at least one second rotor element mounted on the rotor shaft. It is mounted on the rotor shaft on the side of the mass transfer tray facing the second end of the column. As such, the second rotor element(s) can also be called lower rotor element(s) because they are positioned lower than the respective first or upper rotor element while the column is in use. The second rotor element is arranged such that it is capable of scraping off the reaction mixture being transferred through the perforations in the mass transfer tray.

When the column is used in the hydrothermal process of the invention, the above "more viscous fluid" refers to the reaction mixture comprising biomass. The above column can be used in the hydrothermal process of the invention with particular benefit in that it can ensure a sufficient contact and heat transfer between the steam generated in the exothermic polymerization of the activated biomass, and the reaction mixture comprising biomass, which are moving counter-currently. Also, a residence time of the reaction mixture comprising biomass, the biomass slurry, in the order of several minutes can be achieved in the column of the present invention. Moreover, the inventive column ensures a safe conveyance of the biomass slurry without any clogging of the reactor.

Classical plate columns are not satisfactory for the above purposes. This is because classical or conventional plate columns are not designed to cope with the volume flow ratio of biomass slurry and steam typically used in the hydrothermal process of the present invention.

### DETAILED DESCRIPTION OF THE INVENTION

The process for the preparation of coal-like material according to the present invention is a hydrothermal carbonisation process, in short HTC process. This terminology is intended to show that the process involves the heating of a reaction mixture comprising water and will yield carbonized coal-like material.

The term "biomass" as used herein is broadly understood as encompassing all kinds of plant and animal material and material derived from the same. According to a preferred embodiment, biomass as meant in the present specification shall not include petroleum or petroleum derived products.

The biomass for use in the present invention may comprise macromolecular compounds, examples of which are lignin and polysaccharides, such as starch, cellulose, and glycogen. As used herein, the term "cellulose" is intended to encompass hemicelluloses commonly also referred to as polyoses.

As will be appreciated, certain kinds of biomass may include both, plant and animal-derived material. As examples, manure (dung), night soil and sewage sludge can be mentioned. While the biomass for use in the present invention is preferably plant biomass, i.e. biomass of or derived from plants, certain contents of animal biomass (*i.e*. biomass of or derived from animals) may be present therein. For instance, the biomass may contain up to 30 % of animal biomass.

According to a preferred embodiment, the biomass for use in the present invention, which is preferably plant biomass, contains more than 70 wt%, most preferably > 90 wt%, of polysaccharides and lignines in terms of the solid contents of the biomass.

For instance, the plant biomass may be agricultural plant material (e.g. agricultural wastes) or all kinds of wood material.

Without limitation, examples of biomass are crop, agricultural food and waste, feed crop residues, wood (such as wood flour, wood waste, scrap wood, sawdust, chips and discards), straw (including rice straw), grass, leaves, chaff, and bagasse. Furthermore, industrial and municipal wastes, including waste paper can be exemplified.

The term "biomass" as used herein preferably also includes monosaccharides such as glucose, ribose, xylose, arabinose, mannose, galactose, fructose, sorbose, fucose and rhamnose, as well as oligosaccharides.

As is known to one of average skill in the art, "coal-like material", as used herein, refers to a material, which is similar to natural coal in terms of property and texture. Owing to the method of the preparation thereof, it may also be referred to as hydrothermal coal. It is a product, more precisely a carbonized product, that is obtained or obtainable by the hydrothermal carbonization process of the present invention.

As such, the coal-like material can be distinguished from synthetic resins, including those synthetic resins, which have been prepared using monomers obtained from lignocellulosic material, such as phenolic resins, and in particular novolac-type phenolic resins. Such synthetic resins are preferably not encompassed by the expression "coal-like material" as used herein.

The coal-like material obtained in the process of the present invention typically comprises, without limitation, < 70 wt% carbon, for example 60 to 65 wt% carbon, as can be determined by elemental analysis (combustion). Moreover, as can be ascertained by way of solid state ¹³C-NMR spectroscopy, the coal-like material as meant herein is more aliphatic than *e.g.* the product presumably obtained in US 2008/0006518, which is more aromatic. The coal-like material obtained in the hydrothermal carbonisation process of the present invention has a high calorific value, for instance > 23 MJ/kg, preferably 20 to 32 MJ/kg. The calorific value of the coal-like material can be determined by standard calorimetric analysis.

The hydrothermal process of the invention is carried out in a vertically oriented evaporation column as further specified in claim 1, and the polymerization of the activated biomass is completed in a second separate reactor being connected to said column, wherein the second separate reactor is preferably a conveyor screw reactor.

Since the process of the invention is a hydrothermal process, the reaction mixture comprising biomass to be heated by contacting with steam comprises water. For the sake of brevity, the step of heating the reaction mixture by contacting with steam to activate the biomass is also referred to as the "first" step.

According to a preferred embodiment of the hydrothermal process of the invention, at least part of the steam is generated in the exothermic polymerization of the activated biomass, which preferably takes place in the swamp section of a vertically oriented evaporation column. In the process according to the invention, additional steam from external sources can be introduced, such as in particular during process start-up operations but also during stable operation if so desired. However, the additional injection of steam may be unnecessary in stable operation where the process of the present invention can be run energetically self-sufficient.

In the hydrothermal process of the invention, the contact of the reaction mixture comprising biomass with the steam preferably takes place in a section of the evaporation column that is provided with actuating elements disposed within the column, which will be sometimes referred to below as "column interiors" or "column internals". The residence time of the reaction mixture comprising biomass in this column internal section is preferably in the range of 3 to 5 min. Thereby, the above residence time is preferably counted from the moment when the reaction mixture comprising biomass has reached a temperature of at least 180°C, more preferably at least a temperature which is 15°C below the internal column temperature.

According to a preferred embodiment, the polymerization of the activated biomass to give coal-like material in the second step takes place in the swamp section of the evaporation column. As understood herein, the "swamp section" of the column preferably refers to the section of the column, which, when the column is used in the hydrothermal process of the invention, accommodates the reaction mixture comprising activated biomass, and in which section the polymerization to give a reaction mixture comprising coal-like material takes place. The residence time of the activated biomass in the swamp section is preferably 1 to 20 min, more preferably 3 to 13 min. In the process of the invention, the reaction mixture comprising coal-like material obtained from the second step, which additionally comprises non-reacted activated biomass is fed to a separate reactor, which is preferably a pressure-resistant horizontal conveyor screw reactor, in which the polymerization of the activated biomass is completed. The residence time of the reaction mixture in the above separate reactor is preferably 30 to 120 min, more preferably 60 to 90 min.

Also, the pressure in the separate reactor is set to be lower than in the evaporation column. As temperature and pressure are coupled by the vapour pressure curve of water both, in the evaporation column and the separate reactor (which is preferably a pressure-resistant horizontal conveyor screw reactor), the temperature can be lowered through the pressure reduction with ease and without the need of heat exchangers. Thereby the temperature range within the evaporation column is 200 to 250 °C (at corresponding pressures of 16 to 40 bar), preferably 210 to 250 °C, and the temperature in the separate reactor is adjusted by means of a lower pressure to lie within the range of 160 °C to 190 °C (at corresponding pressures of 6 to 15 bar), or within the preferred range of 170 to 190 °C.

Without wishing to be bound to theory, the mechanism of the activation of the biomass when being heated by contacting with steam is assumed to be as follows. Upon heating, the macromolecular species, *e.g.* the polysaccharides contained in or constituting the biomass may be molten or dissolved in water. For instance, cellulose contained in the biomass, which is a crystalline material, will be molten in water. Moreover, the polysaccharides can be disintegrated or broken down to smaller fragments, such as monosaccharides and oligosaccharides. Those fragments will undergo consecutive rapid dehydration to more reactive intermediates, which are capable of undergoing rapid conversion to coal-like material, i.e. coalification, in the second polymerization step. Due to this capability, the reactive intermediates can also be referred to as "coal monomers". The dehydration of glucose to hydroxymethylfurfural is an example for such a dehydration reaction. These "coal monomers" are typically characterized by increased chemical reactivity towards intermolecular reactions, as compared to the raw biomass, e.g. via vinylic subunits, reactive aldehyde side groups, or activated hydroxymethyl groups onto furane moieties.

The water being present in the reaction mixture of the first step may be water adhering or bound to the original biomass, which can also be referred to as "raw" biomass. In this specification, the biomass to be subjected to the first step is also referred to as raw biomass. As meant herein, raw biomass may for instance be the biomass obtained as waste (e.g. wood, agricultural, municipal waste) from the provider, without further treatment, or as collected from natural sources. In the case of wood, the raw wood biomass may be the wood collected in the forest (as the natural source), or sawdust from the wood processing industry. As will be appreciated from the above, the raw biomass can be used as such and with water contents as mentioned above. Though drying is not excluded, *e.g.* in order to reduce the weight and consequently the transportation costs, the (raw) biomass to be subjected to the process of the invention is preferably not dried. Consequently, the present invention allows avoiding the energy-consuming drying of the biomass.

The presence of water in the process of the invention distinguishes this from e.g. pyrolytic processes for the conversion of biomass to coal-like materials by simple heating, typically in the absence of oxygen (carbonization).

In addition to the water present in, *e.g.* bound to the raw biomass such as obtained from natural sources, water may be added to the wet or dry biomass to adjust the water content in the reaction mixture of the first step. The total amount of water, *i.e.* the water bound to or contained in the as-obtained biomass and the additional water is not specifically limited. Preferably, the water content in the reaction mixture of the first step is such that the solid fraction of the reaction mixture is 5 to 35%, more preferably 10 to 30%, especially 15 to 25% by weight. Such contents of solids will ensure that the reaction mixture can move easily in the column and preferably is in the form of slurry.

The reaction mixture comprising water and biomass to be subjected to heating by contacting with steam in the first step may comprise, without limitation, further ingredients as long as these will not inhibit the activation of the biomass to a substantial degree.

The hydrothermal carbonisation process of the present invention can be carried out in water alone. Organic solvents such as ketones are unnecessary, and they are preferably omitted. According to a preferred embodiment, the reaction mixture of the first step contains water as a single solvent, with other solvents such as ethanol only incidentially brought in by the biomass, e.g. by fermentation. Consequently, preferably at least 95 wt%, more preferably at least 98 wt% of the solvent present in the reaction mixture of the first step is water.

An acidic pH proved advantageous to the activation of the biomass by contacting with steam. The pH of the reaction mixture comprising biomass is preferably in the range of 3 to 7, more preferably 4 to 6. An acidic pH of the reaction mixture comprising biomass to be heated by contacting with steam, which is preferably within the above ranges, can be adjusted by adding suitable acids, which do not interfere with the activation of the biomass. Both, inorganic acids, *e.g*. mineral acids, and organic acids can be used. The acid is preferably a strong acid, *e.g.* having a pKₐ of < 4.5. An example of a suitable mineral acid is phosphoric acid. Levulinic acid, oxalic acid, citric acid and formic acid are examples of (strong) organic acids. Particularly preferred is formic acid.

The reaction mixture to be subjected to the first step, which may *e.g.* comprise an acid in addition to the (raw) biomass and water, can be prepared in a suitable mixer, and is preferably pre-heated, e.g. to a temperature of at least 50 °C.

Dependent on which type of biomass is used as a starting material, the particular reaction conditions in the first step may be selected appropriately. In particular, for biomass which can be activated relatively easily, such as monosaccharides, the duration of the activation step, i.e. the residence time in the column internal section of the evaporation column for use in the present invention, may be shorter, and the pH less acidic than for polymeric biomass starting material.

So as to ensure that the heating temperature (or reaction temperature) is sufficient to convert at least larger parts of the (raw) biomass to activated biomass as defined herein, the hydrothermal process is carried out in a pressure vessel, namely, an evaporation column as further specified in claim 1, wherein the temperature, *i.e*. the internal temperature, in the column is in the range of 200 to 250°C, preferably 210 to 250°C and more preferably 220 to 250°C.

According to a particularly preferred embodiment, the temperature is 210 to 250 °C, and the pH value of the reaction mixture is acidic, especially 3 to 7.

The (raw) biomass to be subjected to the first step may be used in any form. Preferably, however it is divided into an appropriate particle size prior to use, *e.g.* in the range of 0.1 to 20 mm, more preferably 0.3 to 10 mm, especially 0.5 to 5 mm. Suitable particle sizes such as those exemplified above can be obtained by methods such as grinding, chopping or sawing.

The activated biomass present in the reaction mixture obtained in the first step comprises the products of the disintegration and/or dehydration of the starting "raw" biomass as detailed above, collectively referred to as "activated biomass" in the present specification.

In the second step, the activated biomass is subjected to polymerization to give coal-like material as defined above. To account for the fact that the "activated biomass" produced in the first step will be polymerized in the second step, the "activated biomass" may in the alternative be referred to as "polymerizable biomass".

The "polymerization" which takes place in the second step is to be construed broadly and means any reaction of molecules of the activated biomass resulting in the built-up of larger molecules eventually yielding coal-like material. The polymerization may include chain-growth of the monomers and inter-chain crosslinking.

There are no specific limitations as to the methods of initiating the polymerization of the activated biomass to give coal-like material in the second step, which preferably takes place in the swamp section of the vertically oriented evaporation column. For instance, the initiation can be achieved by exposure of the reaction mixture comprising activated biomass to radical-generating radiation, such as UV radiation, X-rays and γ-rays. In the alternative, ultrasonic exposure of the reaction mixture can initiate the polymerization. Still further, the polymerization can be initiated by adding a polymerization initiator, and this is a preferred embodiment of the hydrothermal process of the invention.

The polymerization initiator for use in the present invention is not specifically limited in kind, as long as it is suitable to initiate the polymerization of the activated biomass to the carbon-like material in the second step of the hydrothermal carbonization process of the present invention. At the reaction conditions of the second step, the polymerization initiator is usually capable of generating radicals which will start the polymerization of the activated biomass to coal-like material.

Useful polymerization initiators are for instance peroxides, peracids, oxygen, redox initiators and azo compounds, as well as suitable mixtures thereof. Useful peroxides are inorganic peroxides, *e.g.* persulfates such as potassium persulfate and ammonium persulfate; metal peroxides such as (C₂H₅)₂BOOC₂H₅ and compounds obtained by replacing the boron atom of (C₂H₅)₂BOOC₂H₅ with Al or Zn; organic peroxides, *e.g*., acyl peroxides such as benzoyl peroxide, alkyl peroxides such as t-butyl peroxide and cumyl peroxide, peroxy acid esters such as t-butyl peroxalate, or hydrogen peroxide. The oxygen may be supplied in the form of air. As the redox initiator, there may be used Fenton systems, copper salts (such as CuCl₂), FeCl₃/H₂O₂ or Fe(III)/formic acid. The azo compound may be azobisisobutyronitrile.

Most preferably, air, peracids, hydrogen peroxide (H₂O₂) or Fe(III)/formic acid are used as polymerization initiators to initiate in the hydrothermal process of the invention the polymerization of the activated biomass to give a reaction mixture comprising coal-like material.

Subsequent to the second step, the solid phase comprised or consisting of the coal-like material can be separated from the reaction mixture, *e.g.* by filtration or decantation, preferably by filtration, while a liquid phase will remain. In the present invention, the separation is preceded by the completion of the polymerization in a separate reactor, which preferably is a conveyor screw reactor. Then, the coal-like material can be dried.

The inventive column comprises at least one mass transfer tray having a plurality of perforations, which provide exclusive means of communicating between the space above the mass transfer tray and the space below, and at least one upper rotor element being disposed above the mass transfer tray, wherein the upper rotor element is arranged so as to transfer a reaction mixture through the perforations to the space below the mass transfer tray. Thereby, an efficient phase contact between the upward-flowing less viscous fluid (namely steam) and the down-flowing more viscous fluid (i.e. slurry, such as the reaction mixture comprising biomass) can be achieved. In particular, due to the provision of the upper rotor element, the transport of the reaction mixture from one mass transfer tray to an adjacent mass transfer tray is improved, compared to a column not using such a rotor element. As a further advantage of the column of the present invention, it is possible to control and adjust the packing/bulk height and the retention times of the more viscous fluid on the respective mass transfer tray simply by adjusting the rotational speed of the respective rotor element.

In the column in accordance with the invention, the at least one mass transfer tray is preferably horizontally oriented, and the rotor shaft having at least one upper rotor element mounted thereon is preferably vertically oriented. As meant herein, the horizontal orientation of the at least one mass transfer tray covers the situation that the mass transfer tray(s) is/are slightly inclined from the absolute horizontal, and the vertical orientation of the rotor shaft covers the situation that the rotor shaft is slightly inclined from the absolute vertical. For instance, inclinations of ≤ 30°, preferably ≤ 15°, more preferably ≤ 5° measured from the absolute horizontal and/or vertical are to be covered. Similarly, the notion of "vertically oriented" in relation to the evaporation column is meant to cover inclinations as measured from the absolute vertical of ≤ 30°, more preferably ≤ 15°, still more preferably ≤ 5°. Similar considerations apply to the "horizontal" conveyor screw reactor as used herein. Again, inclinations (as measured from the absolute horizontal) as indicated above are to be covered.

In the inventive column, two different heat transfer mechanisms may be utilized concurrently, a first heat transfer mechanism via direct contact of the different fluid phases, and a second heat transfer mechanism via contact of the more viscous fluid and heated mass transfer trays. The first heat transfer mechanism can also be referred to as a heating through direct condensation of the steam coming in contact with the biomass slurry. Further, the permeation characteristics of the more viscous fluid (e.g. the biomass slurry), are improved. This means, due to the continuous movement of the more viscous fluid by means of the rotor element, the less viscous fluid (gas/vapour bubbles) permeates the more viscous fluid at varying locations, instead of permeating the more viscous fluid only at certain preferred locations as in the case of non-agitated more viscous fluids.

Preferably, the at least one mass transfer tray is disposed horizontally within the housing. A horizontal arrangement of the mass transfer tray generally provides for long retention times and, thus, a satisfactory space-time-yield. Due to shorter retention times, conically arranged mass transfer trays are generally less preferred. However, it is also contemplated to use horizontally as well as conically arranged mass transfer trays. If, for example, a highly viscous fluid was used as the more viscous fluid, at an upper part of the column conically arranged mass transfer trays could be provided, whereas at a lower part of the column horizontally arranged mass transfer trays could be provided. The reason therefor is that the fluid tends to become less viscous from the upper to the lower part of the column. By providing differently arranged mass transfer trays, the respective retention times of the fluid on the mass transfer tray can be adjusted. According to one preferred embodiment, the at least one mass transfer tray is heatable so as to allow for an efficient heat transfer between the mass transfer tray and the more viscous fluid present on the mass transfer tray.

The shape of the perforations is generally not restricted. In principle, the perforations may have any geometric shape such as circular, elliptical, rectangular or polygonal. Preferably, the perforations are provided in form of circular openings or slits. Preferably, the perforations within the same mass transfer tray have the same diameter (area) and, if a plurality of mass transfer trays is provided, all mass transfer trays have perforations of the same diameter. Preferably, the perforations are homogeneously distributed over the entire area of the respective mass transfer tray. Further, according to another preferred embodiment, the diameter of the perforations may vary within the same mass transfer tray and/or among different mass transfer trays provided in the column. In this regard, it may be preferable to provide a mass transfer tray having sections with perforations of relatively larger diameters and sections of relatively smaller diameters, to avoid clogging by larger particles so as to improve the operating stability of the column. In this respect, the perforations having relatively larger diameters may be concentrated, preferably exclusively present in a sector of the mass transfer tray. Since the more viscous fluid is being continuously moved/agitated by the upper rotor element, it can be ensured that also larger particles will be reliably transferred through the mass transfer tray, at least when passing over the sector, i.e. "tart piece" having relatively larger perforations. Further, it may also be preferable to design the perforations of a plurality of mass transfer trays within a column differently, in particular such that the diameter of the perforations decreases with increasing distance from the head of the column. Still further, the distribution of perforations and their diameter is adjusted such as to compensate for the rotational speed of the rotor element (s) varying along in the radial direction of the mass transfer tray, thus ensuring a constant flow of fluids over the entire tray. The diameter of the perforations is preferably in the range between 1 and 20 mm, more preferably in the range between 5 and 15 mm.

The at least one upper rotor element may be mounted axially displaceable on the rotor shaft. Thereby, the arrangement of the rotor element relative to the mass transfer tray, i.e. the distance/height in which the rotor element is provided above the mass transfer plate, can be easily adjusted. According to another preferred embodiment, the at least one upper rotor element may be axially fixed on the rotor shaft and blade and/or brushing elements, which will be described below, may be mounted axially displaceable on the rotor element. Such a distance/height adjustment may for instance be necessitated by varying operating conditions, which lead to a thermal expansion/contraction of column internal parts. The necessary pressure to press the upper rotor element(s) on the upper surface of a respective mass transfer tray, so as to pass the reaction mixture through the perforations in the tray, may either be achieved by the own weight of the rotor element or by means of a spring load. Preferably, the respective upper rotor element is merely pressed by its own weight onto the upper surface of a respective mass transfer tray. If the pressing is to be achieved by means of a spring load, mounting of the rotor element(s) by means of a spring bearing is contemplated. Preferably, the at least one rotor element is mounted radially fixed on the rotor shaft so that the rotor element will be rotated by rotation of the rotor shaft only.

The at least one upper rotor element may be provided in form of a helical element, which is disposed above the mass transfer tray (first tray) and is arranged so as to transfer the reaction mixture through the perforations to the space below the mass transfer tray (first tray). According to a preferred embodiment, the helical element has such a size and shape so as to additionally scrape off the reaction mixture being transferred through perforations to the space below a further mass transfer tray (second tray), being positioned above the first tray. Thereby, a single rotor element serves two purposes at once, namely to transfer the reaction mixture through the perforations of a first tray and to scrape off the reaction mixture previously transferred through the perforations of a second tray. However, the shape of a rotor element serving dual purposes is not limited to the above mentioned helical shape. Rather, such a rotor element may have any shape suitable to achieve transfer of the reaction mixture through the perforations of a first tray and scraping off of the reaction mixture previously transferred through the perforations of a second tray. By providing the "dual-function" rotor element, as outlined above, the operating efficiency of the column is improved.

According to one preferred embodiment, the at least one upper rotor element comprises blade and/or brushing elements. In this regard, the number and specific arrangement of blade and/or brushing elements on the rotor element is not limited, but can be varied according to the specific needs. The term "blade elements" comprises scraping/scratching/cleaning elements having a defined blade. On the other hand, the term "brushing element" comprises scraping/scratching/cleaning elements without a defined blade, such as a wire brush or steel wool. The blade and/or brushing elements may be mounted on the rotor elements fixedly or in a spring-loaded manner. Preferably, the blade and/or brushing elements are mounted on the respective rotor element in a spring-loaded manner, such that the distance/height in which the respective blade and/or brushing element is provided above a respective mass transfer tray may be automatically adjusted by setting a suitable pre-load of the spring.

Instead of providing a dual-function rotor element, as outlined above, at least one additional lower rotor element may be provided which is mounted on the rotor shaft and is disposed below the mass transfer tray. The additional lower rotor element is arranged so as to scrape off the reaction mixture being transferred through the perforations to the space below the mass transfer tray. By providing an additional lower rotor element to scrape off reaction mixture previously transferred through perforations in the mass transfer tray, the arrangement of the upper and lower rotor elements relative to the respective mass transfer tray can be more easily carried out. This means, the distance/height in which the upper rotor element is provided above a respective mass transfer plate can be easily adjusted, and the distance/height in which the lower rotor element is provided below a respective mass transfer plate can be easily adjusted as well.

The mass transfer tray may be provided in form of a reversed fixed valve tray. The term "fixed valve tray" is known in the art and, therefore, an explanation thereof will be omitted. The term "reversed" in this context means a fixed valve tray which is arranged upside down, compared to the "normal" or "general" arrangement of fixed valve trays in which the valves are provided at the upper side of the respective tray being fixed in a column. By means of the design of the mass transfer tray in form of a reversed or overturned fixed valve tray, the contact between the different phases, i.e. biomass and vapour, can be improved. If reversed fixed valve trays are used, it is preferred to adjust (enlarge) the diameter of the perforations, to maintain a reasonable space-time-yield.

At least one inner wall wiper may be provided inside the housing. The at least one inner wall wiper may be attached to the rotor shaft so as to rotate together with the rotor elements and pass along the inner periphery of the housing. Such an inner wall wiper may be provided to pass along directly on the periphery of the inner wall of the housing of the column, if the column internals are designed in an "open configuration". In such an open configuration, the mass transfer trays are directly fixed to the wall of the housing instead of being fixed to an extra housing of the column internal. On the other hand, such an inner wall wiper may be provided to pass along on the periphery of the inner wall of a column internal wall. In such a configuration of the column, the column internals comprise an extra housing and the mass transfer trays are fixed to the housing of the column internals instead of being directly fixed to the housing of the column. The inner wall wiper may be provided in form of a "plane cutter" so as to scrape along the inner periphery of the respective housing. Thereby, an overgrowth of the column in radial direction can be prevented. Preferably, the inner wall wiper is arranged in parallel to the longitudinal axis of the column. According to another preferred embodiment, the inner wall wiper is arranged obliquely to the longitudinal axis of the column to achieve an additional conveying effect.

A column, having the features as outlined above, may be used in a process for the preparation of coal-like material. The process for the preparation of coal-like material, in which the inventive column is used, may have the features as outlined above.

### BRIEF DESCRIPTION OF THE DRAWINGS

Fig. 1 provides a schematic flow diagram showing a preferred mode of carrying out the hydrothermal process of the invention in a continuous mode.
Fig. 2 shows a side view of an evaporation column for use in the hydrothermal process of the invention.
Fig. 3 shows a side view of a column interior module.
Fig. 4 shows a perspective view of a column interior module.

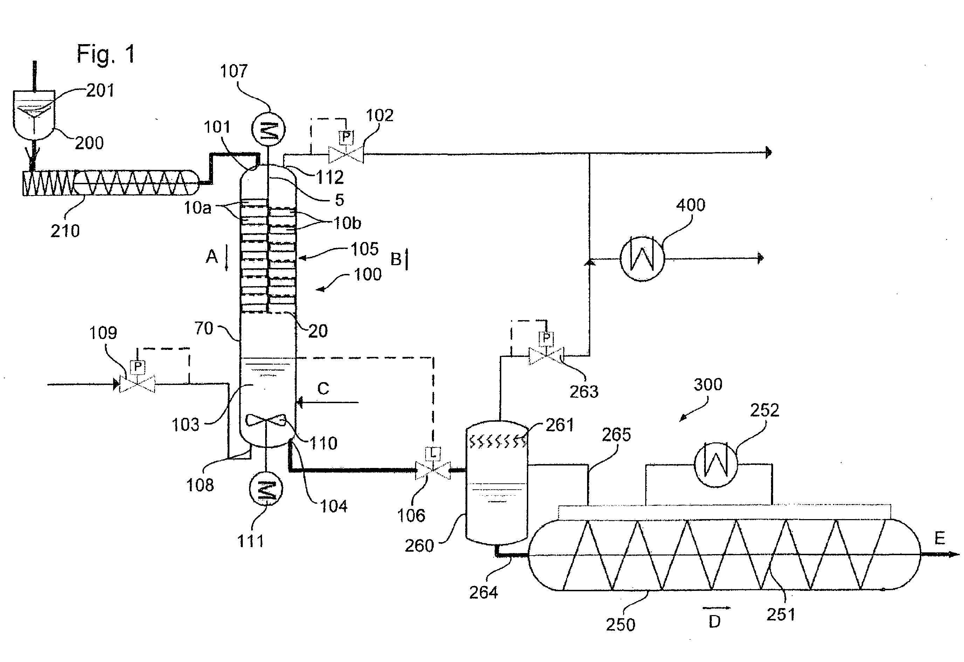

The embodiment illustrated in Figs. 1 - 4 is shown for illustration purposes only, and is by no means restricting the scope of the invention, which is defined in the appending claims.

In the following, a preferred mode of carrying out the hydrothermal process of the invention in a continuous mode will be further described by reference to Fig. 1.

A reaction mixture comprising biomass and water in the form of a slurry having an elevated temperature of about 50°C, preferably about 80°C, is fed from an atmospheric vessel 200, which is optionally equipped with stirring means 201, to an excenter pump 210. The biomass slurry is fed into the head of the column 100 by the excenter pump 210 through an upper inlet 101. Preferably, the column 100 has a length in the range of between 2 m to 3 m and a mean diameter of between 300 mm and 400 mm. Such a column 100 would then serve for the treatment of about 0.5 m³/h biomass having a solid content of between 15% and 25%. In the evaporation column 100, pressure and temperature are coupled by the vapour pressure curve of water. Typical internal temperatures within the column lie in the range of 200°C and 250°C with corresponding pressures between 16 and 40 bar. If the amount of biomass to be treated in the column 100 is about 0.5 m₃/h, we expect a steam assignment of between 100 and 200 kg/h, at a pressure of between 25 bar and 30 bar.

The head pressure of the column 100 is controlled using an overflow valve 102, the set point of which is one of the core control parameters of the process. Furthermore a necessary purging of non-condensing side products like carbon dioxide or methane, as well as entrained air, is achieved by this removal of steam through the outlet 112.

The biomass slurry is moving downwards the column parallel to the direction illustrated by arrow A counter-currently to steam rising upwards parallel to the direction illustrated by arrow B. The steam is preferably generated in the exothermic polymerization of the activated biomass in the swamp section 103 of column 100. In particular during process start-up but also in the stable state of the process, additional pressurized steam can be introduced into the column through a lower inlet 108. Since the slurry is sub-cooled with regard to the pressurized steam an effective transfer of heat is achieved by condensation of steam, leading to an intense heating of the slurry. This leads to elevated temperatures, initiating the activation of the biomass in the reaction mixture as a first step of the hydrothermal carbonization. A plurality of rotor elements 10a, 10b mounted on a rotor shaft 5 which is rotated by a motor 107 at a rotational speed of only a few revolutions per minute, such as in the range of 2-5 rpm, preferably 3-4 rpm is in communication with a corresponding number of sieve plates (mass transfer trays) 20 fixedly mounted within the column 100.

The required phase contacting efficiency is achieved by appropriate column internals 10a, 10b, 20. These internals 10a, 10b, 20 can be classical distillation trays like sieve or fixed valve trays, as well as tilted constructions like baffle plates or disc and donut setups. Preferably, the column 100 is a column in accordance with the present invention, *i*.*e*. comprising at least one rotor shaft 5 and at least one rotor element 10a, 10b.

Besides achieving effective phase contact, a residence time of the slurry within the process section 105 of 3-5 minutes is achieved to allow for sufficient activation of the biomass. Thereby, the "residence time" is defined as described above.

In the swamp section 103 of the column 100, the polymerization of the activated biomass to give coal-like material takes place. The design is that of a continuously stirred tank reactor or a cascading reactor with a residence time of several minutes. The liquid level, and consequently the residence time, can be adjusted using a control valve 106. For instance, commercially available control valves known from the paper industry can be used. While the initiation of the polymerization of the activated biomass to give coal-like material can be achieved e.g. by exposure to radical-generating radiation or ultrasound, this is accomplished in the process shown in Fig. 1 by adding a polymerization initiator. This is symbolised by arrow C. Specifically, the polymerization initiator is fed through one or several injection nozzles (not shown) into the boiling slurry accommodated in the swamp section 103. The polymerization of the activated biomass to coal-like material is strongly exothermic. Due to the pressure limitation by the overflow valve 102 at the column's 100 head this leads to a boiling of the slurry and a partial evaporation of water. Furthermore the controlled initiation of the polymerization prevents a later uncontrolled self-ignition of the reactor 100 with a potential runaway scenario. The flow of the polymerization initiator from the dosage pump (not shown) is preferably controlled in a way that the amount of latent heat transported with the rising steam is slightly surpassing the heat requirements of the biomass activation. This can be controlled by monitoring the mass flow of steam behind the overflow valve 102. Using externally driven stirring means 110 driven by a motor 111 can ensure good homogeneity of the slurry and good dispersion of the initiator and can prevent sedimentation and formation of hot spots.

Additionally the swamp section 103 of the column 100 is equipped with one or more steam injection valves 109. In order to start the process pressurized steam of the desired reaction temperature is injected into the slurry. During stable operation the process of hydrothermal carbonization is energetically, and through the chosen process design also exergetically, self-sustained. Consequently an additional injection of steam may be only required during process start-up operations. However, if desired, additional steam can also be injected after the process start-up operations have been completed. The steam required for this can be taken from a local pressurized steam supply (not shown) or from a steam generator (not shown). The flow rate through the steam injection valve 109 is controllable in order to allow for a smooth transition into the stable operation mode. According to the invention, a substantial application of energy from the outside takes place during a start phase, and up to a process level attaining substantially stable conditions, such as steam pressure in the column 100 or the like. Such stable process conditions may be achievable within a few minutes after initiating the activation process, it may, however, be preferable to support the running process from outside over a longer period of time, up to about 30 minutes.

The activated biomass exits the column 100 via the exhaust port 104 and is fed through the valve 106 into a process section 300 disposed downstream, in which the polymerization of activated biomass to coal-like material can be completed. Core element of this section is a horizontal conveyor screw reactor 250 that is designed as a pressure vessel. The screw reactor 250 implements a residence time of the slurry, which is preferably in the range of 20 to 120 minutes, more preferably in the range of 60 to 90 minutes. Preferably, the pressure within the screw reactor 250 is lower than in the evaporation column 100. A limitation of temperature can be achieved by controlling the pressure within the vapour volume. The temperature within the conveyor screw reactor is preferably in the range of 160 to < 200°C (at a corresponding pressure of 6 to 15 bar), and it is more preferably in the range of 170 to 190 °C. For example, a pressure of approximately 10 bar with a respective evaporation temperature of 180°C may be set here. The ratio between the diameter and length (aspect ratio) of the conveyor screw reactor 250 may for instance be in a range of 1:5 to 1:15 and is more preferably in the range of 1:10 to 1:14. Without limitation, the degree of filling of the screw reactor 250 may be in the range of 20 to 50%. For instance, the aspect ratio as defined above may be about 1:12 at a degree of filling from 20 to 50%. To give a concrete example, the reactor 250 may have a diameter of 700 mm and a length of 7000 mm.

According to a preferred embodiment, the pressure is substantially constant over the length of the screw reactor 250, *i.e.* there is no pressure gradient. That means the relative variation of pressure over the length of the reactor 250 is preferably ≤ 5%, more preferably ≤ 2%.

The slurry is expanded via the control valve 106 of the liquid level control into a gas/liquid phase separator 260, either using a special distribution device or directly into the open vessel volume. Optionally this separator 260 is equipped with special inserts 261 for droplet removal. The pressure in the screw reactor 250 and the separator vessel 260 can be controlled by an overflow valve 263 at the head of the separator vessel 260. The flashing of the already boiling slurry into this lower pressure or subsequent process section 300 effects a partial evaporation of the water contained in the slurry and consequently generation of steam as well as a minor thickening of the slurry and a cooling down of the slurry to the local evaporation temperature. From the separator 260 the slurry falls directly via a piping 264 into the screw reactor 250. The separator vessel 260 can be designed as an independent vessel or as a superstructure of the screw reactor 250.

Within the screw reactor 250 the slurry is transported continuously from one end to the other parallel to the direction illustrated by arrow D, realizing the required time of residence as well as a narrow residence time distribution. The delivery rate can either be controlled by the filling level of the screw reactor 250 or by a sufficiently high fixed rotation speed of its screw 251.

The vapor space of the separator 260 and the screw reactor 250 can be connected, e.g. via a conduit 265. Optionally cooling elements can be installed in the vapour space. As an alternative option a condensing heat exchanger 252 can be coupled to the vapour space. For the condensate reflux a liquid distribution device (not shown) can be installed within the vapour volume. Heat of reaction removed this way can be utilized elsewhere. The total steam production in process section 300 can be monitored using a mass flow meter (not shown) in the steam line, for instance behind the overflow valve 263. If a coupling of the vapour space of screw reactor 250 and separator vessel 260 is implemented via a dedicated conduit 265, an optional mass flow control can be provided in that conduit 265 so as to control the evaporation through the heat of reaction. The slurry comprising coal-like material can be taken out from the screw reactor 250 (as symbolized by arrow E), and for instance.be fed to a buffer vessel (not shown).

The hydrothermal carbonization is an exothermic process. In the two phase counter-current flow process of the invention the majority of the reaction heat is transported out of the process in form of sensible and latent heat of steam. These heat streams have temperature levels such that they can be economically utilized for a variety of purposes.

If no direct consumer of steam is locally available these steam flows can be directed into a condensing heat exchanger 400. The condensate is either subjected to further uses or disposed of. Dependent on their composition and amounts, the non-condensing side products may be burned or directly emitted into the atmosphere.

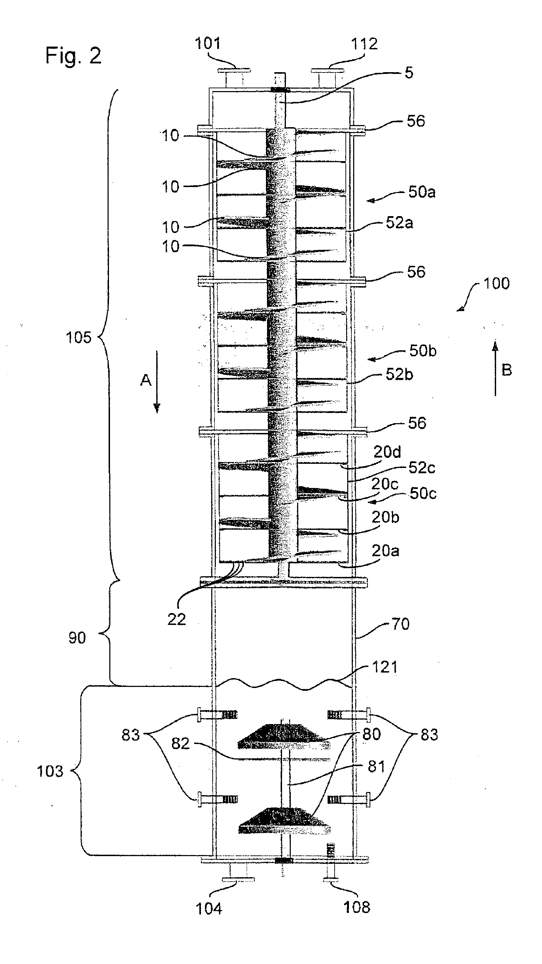

In the following, the columns in accordance with the present invention will be further described by reference to the appended figures. Preferably, column internals 50 as outlined in detail below with regard to Figs. 2 to 4 will be utilized in the evaporation column for use in the hydrothermal process of the invention.

Fig. 2 shows a side view of an evaporation column 100 which is used for the HTC-process described above. As can be seen from Fig. 2, the inventive column 100 comprises a housing 70 in which a plurality of column internals 50 is arranged. In the present embodiment, three column internals 50a - 50c are arranged coaxially aligned on upon the other inside the column housing 70, however, the number of the column internals 50 is not limited hereto. The respective column internals 50a - 50c may be attached to the column housing 70 by means of flange mountings 56. In this regard, the uppermost column internal 50a may be mounted/suspended in the column 100 by mounting of the flange 56 e.g. on a projection (not shown) inside the housing 70. The further/lower column internals 50b, 50c may then be suspended by being screwed to the respective upper column internal 50. It is also contemplated to stack the respective column internals 50a - 50c one on top of the other inside the column housing 70. These stacked column internals 50a - 50c may then e.g. be screwed to one another so as to fix their arrangement relative to each other. As a further alternative, respective column internal housings 52 may be shaped such that the position of one column internal housing 52a - 52c relative to an adjacent column internal housing 52 may be fixed without using additional attachment means, e.g. by providing the housings 52 with different external diameters which allow for an insertion, for instance by press fitting of one housing 52 with another one. However, the way of mounting of the column internals 50a - 50c is not limited to the above and any suitable way of mounting may be employed, depending on the respective needs.

In the upper section 105 of the column 100, three module-like column internals 50a - 50c are disposed on top of each other and coaxially aligned with the rotor shaft 5 extending through this upper section 105. Each of these module-like column internals comprises four sieve plates 20a - 20d, and eight corresponding helically shaped rotor elements 10 a pair of which is each allocated to the respective sieve plates 20a - 20d.

Disposed in a downstream direction of the upper section 105 parallel to the arrow A, the column 100 comprises a steam section 90 providing for a buffer region above the swamp, and preventing a contact of the slurry swamp with the lowermost sieve plate 20a of column internal 50c. This buffer region 90 allows for an undisturbed performance of the entire column 100 even if the amount of slurry within the swamp differs during the process of the invention. Furthermore, this buffer section 90 allows for the operation of distinct measuring elements for detecting, inter alia, the temperature or pressure within the column 100, or for the operation of safety features such as relief valves or bursting disks.

Stirring means 80, two of which are shown in Fig. 2, are disposed within the swamp section 103 of the column 100 below the slurry surface 121. Preferably, these stirring means 80 draw in the slurry in an axial direction and discharge the drawn-in slurry in a radial direction. According to a particularly preferred embodiment, the stirring means are as described in DE-A-100 50 030 or DE-U-200 17 328. This ensures a good dispersion of any initiator within the slurry, and prevents the formation of sedimentation or hot spots in the slurry. Both stirring means 80 are mounted on a common shaft 81 driven by a separate motor (not shown). In a preferred embodiment, however, the stirring means 80 are fixed to the rotor shaft 5 extending through the entire column 100. If there are two (or more) stirring means 80, an optional perforated disc 82 can be provided between each pair of them with the purpose of facilitating the formation of a convection zone for each stirring means. Any polymerization initiator can be introduced in the slurry through inlets 83, four of which are shown in Fig. 2. The positioning of the inlets 83 is not particularly limited, but is preferably done in accordance with the desired flow pattern within the swamp section.

In the embodiment shown in the Figures, each column internal (mass transfer segment) 50a - c comprises four mass transfer trays 20a - d. The mass transfer trays 20 are "dual-flow" trays in which a more viscous fluid passes through perforations 22 in the trays 20 in a downward direction parallel to arrow A while a less viscous fluid passes upwardly through the same perforations 22 in a direction parallel to arrow B. Thus, the term dual-flow tray refers to column trays having perforations to which a less viscous fluid and a more viscous fluid pass counter-currently. Such trays 20 generally have a plurality of perforations 22 which provide exclusive means of communicating between the space above the mass transfer tray 20 and the space below. In the preferred embodiment shown in Figs. 2 to 4, the mass transfer trays 20 are provided in form of sieve plates 20a - 20d having circular perforations 22 all of the same size, by analogy to a classical weirless perforated tray column.

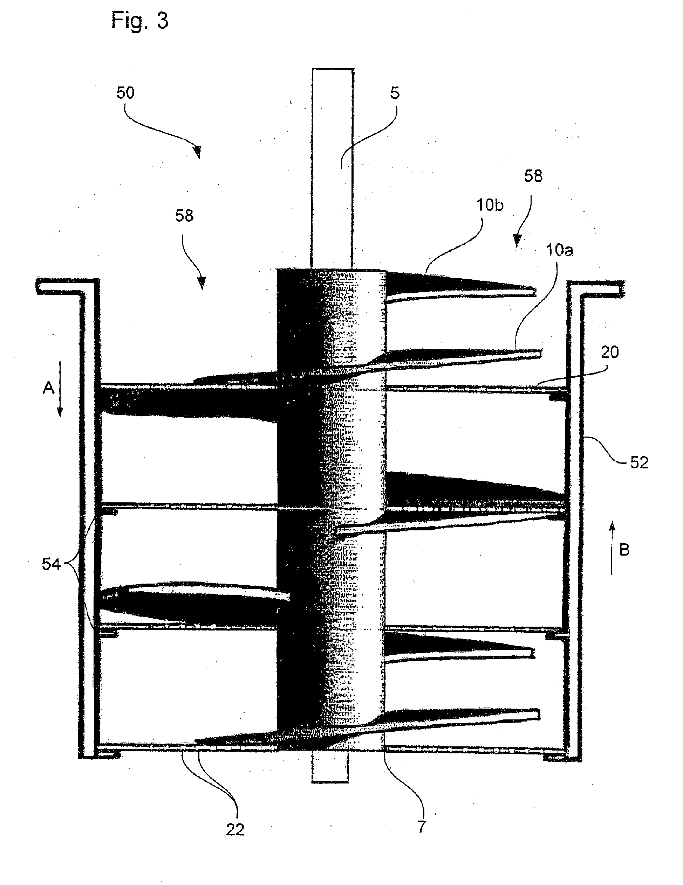

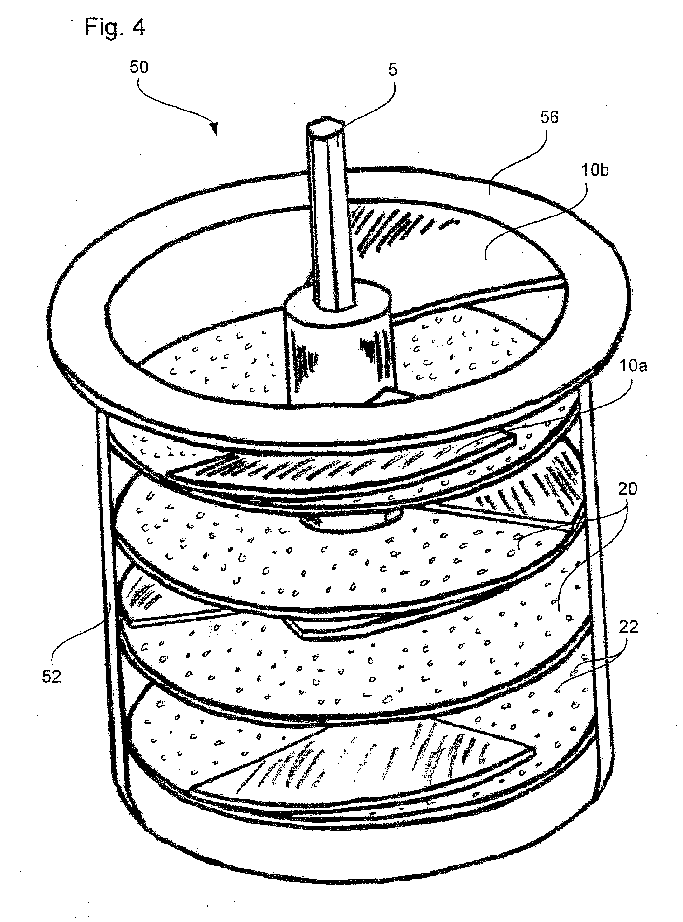

The mass transfer trays 20 are arranged horizontally within the column 100. In the embodiment shown in the Figures, see in particular Fig. 3 and 4, the trays 20 are mounted via mounting elements 54 to a column internal wall or housing 52. If such column internal housing 52 is not provided, which is herein termed an "open configuration", the trays 20 may be mounted directly to the column housing 70. As regards the mounting elements 54, these may be provided in form of projections to which the respective mass transfer trays 20 may be attached e.g. by screwing or welding.

Fig. 3 shows a module-like structure of a column internal 50, and at least the upper section 105 of the column 100 can house two or more such modules. Preferably, the upper section 103 of the column 100 is composed of two or more modules 50 being mounted on top of each other, and further contained by a common rotor shaft 5.

Each mass transfer tray 20 comprises a centrally arranged rotor shaft opening 7 through which a rotor shaft 5 passes. The rotor shaft 5 can be provided in one piece, passing through all three column internals 50, or may be segmented if this should be necessary, e.g. due to an easier mounting in a limited space inside the column 100.

In the preferred embodiment, as e.g. shown in Fig. 4, the rotor shaft 5 is provided in the form of a hexagonal shaft. However, the shape of the rotor shaft 5 is not limited hereto and can be any suitable shape, such as e.g. round or square. Preferably, the rotor shaft 5 is provided with a foot bearing (not shown) which may e.g. be designed as an intermediate flange foot bearing. The foot bearing may be lubricated directly by the reaction mixture. This foot bearing is provided to absorb axial loads. Preferably, the rotor shaft 5 is being rotated mechanically, e.g. by means of a mechanical drive such as an electric motor (not shown). In this case, the rotor shaft 5 is lead out of the pressure vessel (column) 100 and is connected to the electric motor outside the column 100. In a preferred embodiment, the rotor shaft 5 terminates in a profiled journal (power-take-off) (not shown). Thereby, an axial displacement of the rotor shaft 5 can be enabled and complications due to thermal stresses can be avoided. For this preferred embodiment, a lid of the column (not shown) comprises a feed-through for the rotor shaft 5, which may be either provided directly, e.g. in form of a gland (not shown), or indirectly, e.g. in form of a magnetic clutch (not shown). Inside the pressure vessel 100 follows the counterpart of the profiled journal, which is being inserted during mounting of the lid. Outside the pressure vessel 100, i.e. on the atmospheric side of the column 100, follows the mechanical drive (not shown).

The rotor shaft 5 comprises attaching means for rotor elements 10, which may serve as conveying, scraping and/or stirring elements. In the present embodiment, upper rotor elements 10a and lower rotor elements 10b are provided, each having a helical form. In particular, as e.g. shown in detail in Fig. 3, one upper rotor element 10a is provided above each tray 20 and one lower rotor element 10b is provided below each tray 20, so that one upper rotor element 10a and one lower rotor element 10b are respectively provided in between two adjacent mass transfer trays 20. The number and shape of the rotor elements 10, however, is not limited to the number and shape shown in Figures 2 to 4, but can be any suitable number and shape.

The upper rotor elements 10a are arranged so as to transfer the reaction mixture through perforations 22 to the space below (in the direction parallel to arrow A) a respective mass transfer tray 20, whereas the lower rotor elements 10b are arranged so as to scrape off the reaction mixture having been transferred through perforations 22 to the space below a respective mass transfer tray 20. Thus, the upper rotor elements 10a serve as scraping elements for passing the reaction mixture through the perforations 22, analogous to the principle of "passevite". Thus, the upper rotor elements 10a serve to keep the reaction mixture in motion and to convey the reaction mixture to the next mass transfer tray 20. The lower rotor elements 10b serve as scraping elements for scraping off the reaction mixture from the bottom of a respective mass transfer tray 20 thereby increasing the operating efficiency of the column 100.

Both rotor elements 10a, 10b may be provided in the form of blade and/or brushing elements, i.e. elements either having a defined blade or elements without a defined blade, such as a wire brush or steel wool. In addition to blade and/or brushing elements, further tools may be provided on the rotor shaft 5. For instance, stirring elements (not shown) may be provided to improve the phase contact between the biomass and the vapour. Blade-, scraping- and brushing elements may also be provided to clean the faces of the mass transfer trays 20 from carbon layers depositing on the faces of the trays 20, to avoid a decrease in efficiency of these faces as heat exchange faces.

A HTC-process, such as the hydrothermal process for the preparation of coal-like material in accordance with the present invention, can be conducted in the column 100 as follows. The reaction mixture comprising biomass is fed through an upper inlet 58 and is conveyed by means of the upper rotor elements 10a through the perforations 22 of a first tray 20 to a second tray 20, which is disposed below the first tray 20. Steam that is either generated in a steam generator 230 (see Fig. 1) upon process start-up or generated within the column 100 (by the boiling reaction mixture in the swamp section thereof) upon stable operation is forced through the same perforations 22 to the head of the column 100 due to the pressure drop across the column 100. Thus, the column 100 is operated as a classical "counter-current column" and functions particularly well for relatively high bulk height of several centimetres, which is preferable for the required retention times so as to efficiently operate the column 100. In the column 100 of the invention, the heat transfer occurs through the trays 20, apart from the direct heating of the reaction mixture comprising biomass by contacting with the steam. For this reason, the trays 20 are preferably made of high thermal conductivity material.

## Claims

1. A hydrothermal carbonisation process for the preparation of coal-like material from biomass, **characterized in that** a reaction mixture comprising biomass is heated by contacting with steam, the steam moving counter-currently relative to the reaction mixture, to obtain a reaction mixture comprising activated biomass, and the activated biomass is subsequently polymerized to give a reaction mixture comprising coal-like material,
wherein the reaction mixture is fed to the head of a vertically oriented evaporation column (100) and is moving downwards the column while being in contact with the steam moving upwards the column, the temperature in the column being in the range of 200°C to 250°C;
the reaction mixture comprising coal-like material, which additionally comprises non-reacted activated biomass, is subsequently fed to a separate reactor, in which the polymerization of the activated biomass is completed, the temperature in the separate reactor being adjusted by means of a lower pressure to lie within a temperature range of 160°C to 190°C;
the activated biomass comprises the products of the disintegration and/or dehydration of the biomass; and
the column (100) comprises:
at least one horizontally oriented mass transfer tray (20) having a plurality of perforations (22), the perforations (22) providing exclusive means of communicating between the space above the mass transfer tray (20) and the space below,
only one vertically oriented rotor shaft (5) passing through a rotor shaft opening (7) in the mass transfer tray (20),
at least one upper rotor element (10a) mounted on the rotor shaft (5) and being disposed above the mass transfer tray (20), wherein the upper rotor element (10a) is arranged so as to transfer a reaction mixture through the perforations (22) to the space below the mass transfer tray (20), and
a housing (70) provided at its upper end with an upper inlet and upper outlet and, at its lower end, with a lower inlet and lower outlet, the upper inlet and lower outlet permitting slurry to be introduced into the column and to be taken therefrom, and the lower inlet and upper outlet permitting steam to be introduced into the column and to be taken therefrom,
wherein the mass transfer tray (20) is disposed within the housing (70).

2. The process according to Claim 1, wherein the polymerization of the activated biomass to give coal-like material takes place in the swamp section of the column, which section is preferably provided with stirring means.

3. The process according to Claim 1 or 2, wherein the polymerization of the activated biomass is initiated by adding a polymerization initiator, by exposure to radical-generating radiation or by exposure to ultrasound.

4. The process according to any one of Claims 1 to 3, wherein at least part of the steam is generated in the exothermic polymerization of the activated biomass.

5. The process according Claim 4, wherein the reaction mixture comprising biomass is heated at least partially by the steam generated in the polymerization of the activated biomass to a temperature at which the biomass will be converted to activated biomass.

6. The process according to any one of Claims 1 to 5, wherein the contact between the reaction mixture and the steam takes place in a column internal section provided in the column.

7. The process according to any one of Claims 1 to 6, wherein the separate reactor, is a conveyor screw reactor.

8. A column (100), comprising:
at least one horizontally oriented mass transfer tray (20) having a plurality of perforations (22), the perforations (22) providing exclusive means of communicating between the space above the mass transfer tray (20) and the space below;
only one vertically oriented rotor shaft (5) passing through a rotor shaft opening (7) in the mass transfer tray (20) ;
at least one upper rotor element (10a) mounted on the rotor shaft (5) and being disposed above the mass transfer tray (20), wherein the upper rotor element (10a) is arranged so as to transfer a reaction mixture through the perforations (22) to the space below the mass transfer tray (20); and
a housing (70) provided at its upper end with an upper inlet and upper outlet and, at its lower end, with a lower inlet and lower outlet, the upper inlet and lower outlet permitting slurry to be introduced into the column and to be taken therefrom, and the lower inlet and upper outlet permitting steam to be introduced into the column and to be taken therefrom;
wherein the mass transfer tray (20) is disposed within the housing (70).

9. The column (100) according to Claim 8, wherein the at least one upper rotor element (10a) comprises blade and/or brushing elements.

10. The column (100) according to Claim 8 or 9, further comprising at least one lower rotor element (10b) mounted on the rotor shaft (5) and being disposed below the mass transfer tray (20), wherein the lower rotor element (10b) is arranged so as to scrape off the reaction mixture being transferred through the perforations (22) to the space below the mass transfer tray (20).

11. A use of a column as defined in any one of Claims 8 to 10 in a process for the preparation of coal-like material.

12. The use according to Claim 11, wherein the process for the preparation of coal-like material is as defined in any one of Claims 1 to 7.

## Patentansprüche

1. Hydrothermales Carbonisierungsverfahren zur Herstellung von kohleartigem Material aus Biomasse, **dadurch gekennzeichnet, dass** eine Reaktionsmischung, die Biomasse umfasst, durch Kontakt mit Dampf erwärmt wird, wobei der Dampf sich im Gegenstrom relativ zu der Reaktionsmischung bewegt, um eine Reaktionsmischung zu erhalten, die aktivierte Biomasse umfasst, und die aktivierte Biomasse anschließend polymerisiert wird, um eine Reaktionsmischung zu erhalten, die ein kohleartiges Material umfasst,
wobei die Reaktionsmischung am Kopf einer vertikal ausgerichteten Verdampfungskolonne (100) zugeführt wird und sich nach unten in der Kolonne bewegt, während sie in Kontakt mit dem sich in der Kolonne nach oben bewegenden Dampf steht, wobei die Temperatur in der Kolonne im Bereich von 200°C bis 250°C liegt;
die Reaktionsmischung mit dem kohleartigen Material, welche zusätzlich nicht-reagierte aktivierte Biomasse umfasst, anschließend in einen separaten Reaktor geführt wird, in dem die Polymerisation der aktivierten Biomasse abgeschlossen wird, wobei die Temperatur in dem separaten Reaktor mit Hilfe eines niedrigeren Drucks eingestellt wird, so dass sie in einem Temperaturbereich von 160°C bis 190°C liegt;
die aktivierte Biomasse die Produkte der Zersetzung und/oder Entwässerung der Biomasse umfasst; und
die Kolonne (100) umfasst:
mindestens einen horizontal ausgerichteten Stoffaustauschboden (20) mit mehreren Perforationen (22), wobei die Perforationen (22) die einzigen Kommunikationsmittel zwischen dem Raum oberhalb des Stoffaustauschbodens (20) und dem Raum unterhalb bereitstellen,
nur eine vertikal ausgerichtete Rotorwelle (5), die durch eine Rotorwellenöffnung (7) in dem Stoffaustauschboden (20) verläuft,
mindestens ein oberes Rotorelement (10a), das auf der Rotorwelle (5) befestigt ist und sich oberhalb des Stoffaustauschbodens(20) befindet, wobei das obere Rotorelement (10a) so angeordnet ist, um eine Reaktionsmischung durch die Perforationen (22) in den Raum unterhalb des Stoffaustauschbodens (20) zu übertragen, und ein Gehäuse (70), das an seinem oberen Ende mit einem oberen Einlass und oberen Auslass und an seinem unteren Ende mit einem unteren Einlass und unteren Auslass versehen ist, wobei der obere Einlass und der untere Auslass es gestatten, dass eine Aufschlämmung in die Kolonne eingeführt wird und davon entnommen wird, und der untere Einlass und der obere Auslass es gestatten, dass Dampf in die Kolonne eingeführt wird und davon entnommen wird,
wobei der Stoffaustauschboden (20) innerhalb des Gehäuses (70) angeordnet ist.

2. Verfahren gemäß Anspruch 1, wobei die Polymerisation der aktivierten Biomasse, um ein kohleartiges Material zu ergeben, in dem Sumpfabschnitt der Kolonne stattfindet, wobei der Abschnitt vorzugsweise mit einer Rührvorrichtung versehen ist.

3. Verfahren gemäß Anspruch 1 oder 2, wobei die Polymerisation der aktivierten Biomasse durch Zugabe eines Polymerisationsinitiators, durch Einwirkung von radikalbildender Strahlung oder durch Einwirkung von Ultraschall gestartet wird.

4. Verfahren gemäß einem der Ansprüche 1 bis 3, wobei wenigstens ein Teil des Dampfes in der exothermen Polymerisation der aktivierten Biomasse erzeugt wird.

5. Verfahren gemäß Anspruch 4, wobei die Reaktionsmischung mit der Biomasse wenigstens teilweise durch den bei der Polymerisation der aktivierten Biomasse erzeugten Dampf auf eine Temperatur, bei der die Biomasse in aktivierte Biomasse umgewandelt werden wird, erhitzt wird.

6. Verfahren gemäß einem der Ansprüche 1 bis 5, wobei der Kontakt zwischen der Reaktionsmischung und dem Dampf in einem Innenquerschnitt der Kolonne, der in der Kolonne bereitgestellt ist, stattfindet.

7. Verfahren gemäß einem der Ansprüche 1 bis 6, wobei der separate Reaktor ein Förderschneckenreaktor ist.

8. Kolonne (100), umfassend:
mindestens einen horizontal ausgerichteten Stoffaustauschboden (20) mit mehreren Perforationen (22), wobei die Perforationen (22) die einzigen Kommunikationsmittel zwischen dem Raum oberhalb des Stoffaustauschbodens (20) und dem Raum unterhalb bereitstellen,
nur eine vertikal ausgerichtete Rotorwelle (5), die durch eine Rotorwellenöffnung (7) in dem Stoffaustauschboden (20) verläuft,
mindestens ein oberes Rotorelement (10a), das auf der Rotorwelle (5) befestigt ist und sich oberhalb des Stoffaustauschbodens (20) befindet, wobei das obere Rotorelement (10a) so angeordnet ist, um eine Reaktionsmischung durch die Perforationen (22) in den Raum unterhalb des Stoffaustauschbodens (20) zu übertragen, und ein Gehäuse (70), das an seinem oberen Ende mit einem oberen Einlass und oberen Auslass und an seinem unteren Ende mit einem unteren Einlass und unteren Auslass versehen ist, wobei der obere Einlass und der untere Auslass es gestatten, dass eine Aufschlämmung in die Kolonne eingeführt wird und davon entnommen wird, und der untere Einlass und der obere Auslass es gestatten, dass Dampf in die Kolonne eingeführt wird und davon entnommen wird;
wobei der Stoffaustauschboden (20) innerhalb des Gehäuses (70) angeordnet ist.

9. Kolonne (100) gemäß Anspruch 8, wobei zumindest das obere Rotorelement (10a) Klingen- und/oder Bürstenelemente umfasst.

10. Kolonne (100) gemäß Anspruch 8 oder 9, die ferner mindestens ein unteres Rotorelement (10b) umfasst, das auf der Rotorwelle (5) befestigt ist und unterhalb des Stoffaustauschbodens (20) angeordnet ist, wobei das untere Rotorelement (10b) so angeordnet ist, um die Reaktionsmischung, die durch die Perforationen (22) in den Raum unterhalb des Stoffaustauschbodens (20) übertragen wird, abzukratzen.

11. Verwendung einer Kolonne, wie in einem der Ansprüche 8 bis 10 definiert, in einem Verfahren zur Herstellung eines kohleartigen Materials.

12. Verwendung gemäß Anspruch 11, wobei das Verfahren zur Herstellung des kohleartigen Materials eines ist, wie in einem der Ansprüche 1 bis 7 definiert.

## Revendications

1. Procédé de carbonisation hydrothermale pour la préparation d'un matériau de type charbon à partir d'une biomasse, **caractérisé en ce qu'**un mélange réactionnel comprenant une biomasse est chauffé en mettant en contact avec de la vapeur, la vapeur se déplaçant à contre-courant par rapport au mélange réactionnel, pour obtenir un mélange réactionnel comprenant une biomasse activée, et la biomasse activée est ensuite polymérisée pour donner un mélange réactionnel comprenant un matériau de type charbon,
dans lequel le mélange réactionnel est fourni à la tête d'une colonne d'évaporation orientée verticalement (100) et se déplace vers le bas de la colonne tout en étant en contact avec la vapeur se déplaçant vers le haut de la colonne, la température dans la colonne étant dans la plage allant de 200°C à 250°C ;
le mélange réactionnel comprenant un matériau de type charbon, qui comprend de plus une biomasse activée n'ayant pas réagi, est ensuite fourni à un réacteur séparé, dans lequel la polymérisation de la biomasse activée est achevée, la température dans le réacteur séparé étant ajustée au moyen d'une pression plus basse pour se situer dans une plage de températures allant de 160°C à 190°C ;
la biomasse activée comprend les produits de désintégration et/ou de déshydratation de la biomasse ; et
la colonne (100) comprend :
au moins un plateau de transfert de masse orienté horizontalement (20) ayant une pluralité de perforations (22), les perforations (22) fournissant un moyen de communication exclusif entre l'espace au-dessus du plateau de transfert de masse (20) et l'espace en dessous ;
un seul arbre de rotor orienté verticalement (5) passant à travers une ouverture d'arbre de rotor (7) dans le plateau de transfert de masse (20) ;
au moins un élément de rotor supérieur (10a) monté sur l'arbre de rotor (5) et étant disposé au-dessus du plateau de transfert de masse (20), où l'élément de rotor supérieur (10a) est agencé de manière à transférer un mélange réactionnel à travers les perforations (22) vers l'espace en dessous du plateau de transfert de masse (20) ; et un boîtier (70) pourvu au niveau de son extrémité supérieure d'une entrée supérieure et d'une sortie supérieure et, au niveau de son extrémité inférieure, d'une entrée inférieure et d'une sortie inférieure, l'entrée supérieure et la sortie inférieure permettant à une suspension d'être introduite dans la colonne et d'être retirée de celle-ci, et l'entrée inférieure et la sortie supérieure permettant à la vapeur d'être introduite dans la colonne et d'être retirée de celle-ci,
où le plateau de transfert de masse (20) est disposé dans le boîtier (70).

2. Procédé selon la revendication 1, dans lequel la polymérisation de la biomasse activée pour donner un matériau de type charbon a lieu dans la section de marais de la colonne, laquelle section est de préférence pourvue d'un moyen d'agitation.

3. Procédé selon la revendication 1 ou 2, dans lequel la polymérisation de la biomasse activée est initiée par l'ajout d'un initiateur de polymérisation, par l'exposition à un rayonnement de génération de radicaux ou par l'exposition aux ultrasons.

4. Procédé selon l'une quelconque des revendications 1 à 3, dans lequel au moins une partie de la vapeur est générée lors de la polymérisation exothermique de la biomasse activée.

5. Procédé selon la revendication 4, dans lequel le mélange réactionnel comprenant une biomasse est chauffé au moins partiellement par la vapeur générée lors de la polymérisation de la biomasse activée à une température à laquelle la biomasse sera convertie en une biomasse activée.

6. Procédé selon l'une quelconque des revendications 1 à 5, dans lequel le contact entre le mélange réactionnel et la vapeur a lieu dans une section interne de colonne prévue dans la colonne.

7. Procédé selon l'une quelconque selon l'une quelconque des revendications 1 à 6, dans lequel le réacteur séparé, est un réacteur à vis transporteur.

8. Colonne (100), comprenant :
au moins un plateau de transfert de masse orienté horizontalement (20) ayant une pluralité de perforations (22), les perforations (22) fournissant un moyen de communication exclusif entre l'espace au-dessus du plateau de transfert de masse (20) et l'espace en dessous ;
un seul arbre de rotor orienté verticalement (5) passant à travers une ouverture d'arbre de rotor (7) dans le plateau de transfert de masse (20) ;
au moins un élément de rotor supérieur (10a) monté sur l'arbre de rotor (5) et étant disposé au-dessus du plateau de transfert de masse (20), où l'élément de rotor supérieur (10a) est agencé de manière à transférer un mélange réactionnel à travers les perforations (22) vers l'espace en dessous du plateau de transfert de masse (20) ; et un boîtier (70) pourvu au niveau de son extrémité supérieure d'une entrée supérieure et d'une sortie supérieure et, au niveau de son extrémité inférieure, d'une entrée inférieure et d'une sortie inférieure, l'entrée supérieure et la sortie inférieure permettant à une suspension d'être introduite dans la colonne et d'être retirée de celle-ci, et l'entrée inférieure et la sortie supérieure permettant à la vapeur d'être introduite dans la colonne et d'être retirée de celle-ci,
où le plateau de transfert de masse (20) est disposé dans le boîtier (70).

9. Colonne (100) selon la revendication 8, dans laquelle l'au moins un élément de rotor supérieur (10a) comprend une pale et/ou des éléments de brossage.

10. Colonne (100) selon la revendication 8 ou 9, comprenant en outre au moins un élément de rotor inférieur (10b) monté sur l'arbre de rotor (5) et étant disposé en dessous du plateau de transfert de masse (20), où l'élément de rotor inférieur (10b) est agencé de manière à racler le mélange réactionnel qui est transféré à travers les perforations (22) vers l'espace en dessous du plateau de transfert de masse (20).

11. Utilisation d'une colonne telle que définie dans l'une quelconque des revendications 8 à 10 dans un procédé de préparation d'un matériau de type charbon.

12. Utilisation selon la revendication 11, dans laquelle le procédé de préparation d'un matériau de type charbon est tel que défini dans l'une quelconque des revendications 1 à 7.
